(19) Europäisches Patentamt

European Patent Office

Office européen des brevets

(11) Veröffentlichungsnummer: **0 335 184**
**A1**

(12) **EUROPÄISCHE PATENTANMELDUNG**

(21) Anmeldenummer: 89104665.8

(22) Anmeldetag: 16.03.89

(51) Int. Cl.⁴: **C08K 3/04** , **H01B 1/24**

(30) Priorität: 29.03.88 DE 3810599

(43) Veröffentlichungstag der Anmeldung:
04.10.89 Patentblatt 89/40

(84) Benannte Vertragsstaaten:
**DE FR GB IT**

(71) Anmelder: **BAYER AG**

**D-5090 Leverkusen 1 Bayerwerk(DE)**

(72) Erfinder: **Döring, Joachim, Dr.**
**Am Alten Broich 22**
**D-4018 Langenfeld(DE)**
Erfinder: **Heywang, Gerhard, Dr.**
**Nittumer Weg 4**
**D-5060 Bergisch Gladbach 2(DE)**
Erfinder: **Jonas, Friedrich, Dr.**
**Krugenofen 15**
**D-5100 Aachen(DE)**
Erfinder: **Schmidtberg, Werner**
**Am Thelenhof 35**
**D-5090 Leverkusen(DE)**

(54) **Organische Kunststoffe mit erhöhter elektrischer Leitfähigkeit.**

(57) Erfindungsgemäß wird Kokspulver zur Erhöhung der elektrischen Leitfähigkeit von Kunststoffen verwendet. Die Erfindung betrifft ferner die durch das Einarbeiten des Kokspulvers erhaltenen organischen Kunststoffe mit verbesserter elektrischer Leitfähigkeit.

EP 0 335 184 A1

## Organische Kunststoffe mit erhöhter elektrischer Leitfähigkeit

Die Erfindung betrifft organische Kunststoffe mit erhöhter elektrischer Leitfähigkeit.

Es ist bekannt, die elektrische Leitfähigkeit von organischen Kunststoffen durch Zusatz von leitfähigen Stoffen zu erhöhen. So wurden z.B. als anorganische leitfähige Stoffe feinverteilte Metalle, Legierungen, Metalloxide und Metallsulfide, ferner metallisierte Füllstoffe vorgeschlagen. Diese anorganischen leitfähigen Stoffe haben jedoch den Nachteil, daß sie zur Erzielung der gewünschten elektrischen Leitfähigkeit in Mengen eingesetzt werden müssen, die zu einer Beeinträchtigung der mechanischen Eigenschaften der organischen Polymere führen.

Es wurden auch bereits organische Verbindungen als Stoffe zur Erhöhung der elektrischen Leitfähigkeit von organischen Polymeren empfohlen. So wird z.B. im EP-A 0 034 300 der Zusatz elektrisch leitfähiger, nadel förmiger Charge-Transfer-Komplexe (Radikal-Anionensalze) zu organischen Polymeren beschrieben. Diese CT-Komplexe haben jedoch den Nachteil, daß sie aus den organischen Polymeren herausdiffundieren und/oder sich langsam zersetzen können und daß deshalb die durch sie in den organischen Polymeren erzeugte Leitfähigkeit nicht über längere Zeiträume konstant bleibt.

In der US-PS 4 397 971 ist die Verwendung einer speziellen Polyacetylen-Modifikation, des sogenannten kletten-bzw. faserförmigen Polyacetylens, beschrieben. Mit dieser speziellen Polyacetylen-Modifikation wird zwar bereits mit Zusätzen von 0,1 Gew.-% eine brauchbare Erhöhung der Leitfähigkeit des organischen Polymeren erreicht. Diese spezielle Polyacetylen-Modifikation hat jedoch, ebenso wie die üblichen Polyacetylene, den Nachteil, daß sie nicht stabil ist, und daß die Leitfähigkeit bei Lufteinwirkung und häufig sogar bereits beim Einarbeiten des Polyacetylens in die geschmolzenen Kunststoffe stark abnimmt.

In der EP-A 0 224 174 ist die Verwendung von schwefelhaltigen Pyropolymeren zur Erhöhung der Leitfähigkeit von Kunststoffen beschrieben. Die Pyropolymere werden durch Pyrolyse von schwefelhaltigen Kondensationsprodukten aus aromatischen Verbindungen und Schwefel oder schwefelabgebenden Verbindungen erhalten. Mit diesen Pyropolymeren wird zwar eine gute, dauerhafte Erhöhung der elektrischen Leitfähigkeit der Kunststoffe erreicht, die Pyropolymere sind jedoch infolge der mit ihrer Herstellung verbundenen Schwierigkeiten für eine Verwendung in technischem Maßstab zu teuer.

Weiterhin wurde als die elektrische Leitfähigkeit von Kunststoffen verbessernder Stoff feinteiliger Kohlenstoff, wie Aktivkohle, Ruß oder Graphit, vorgeschlagen (siehe z.B. EP-A 0 250 203). Zwar wird mit hochwertigen und deshalb sehr teuren Leitfähigkeitsrußen bereits mit Mengen von 5 Gew.-% eine brauchbare Erhöhung der Leitfähigkeit der organischen Polymeren erreicht. Diese Zusätze von 5 Gew.-% bewirken jedoch bereits eine starke Erhöhung der Viskosität des Kunststoffs, unabhängig davon, ob dieser aus einer Lösung oder in der Schmelze verarbeitet wird, und führen daher zu einer starken Beeinträchtigung der Verarbeitungseigenschaften des Kunststoffs. Die Viskositätszunahme kann in einzelnen Fällen außerdem dazu führen, daß bei der Verarbeitung des organischen Polymers, infolge der erforderlichen hohen Scherkräfte, die für die gute Leitfähigkeit verantwortlichen speziellen Strukturen des Leitfähigkeitsrußes zerstört werden und infolgedessen auch seine leitfähigkeitserhöhende Wirkung herabgesetzt wird. Um zu leitfähigen Kunststoffen mit den erforderlichen mechanischen und verarbeitungstechnischen Eigenschaften zu gelangen wird deshalb in der DE-OS 34 25 628 vorgeschlagen, Ruße zusammen mit silikatischen Füllstoffen in die Kunststoffe einzuarbeiten.

In der veröffentlichen JA-A-4944/72 wird die Verwendung von Gemischen aus feinteiligem Koks und Graphit als Füllstoff für Polyamide beschrieben. In der Praxis hat sich jedoch gezeigt, daß die Einarbeitung von Graphit in Kunststoffe, sei es von Graphit in reiner Form oder in Mischung mit Kokspulver, infolge der Schmiermitteleigenschaften des Graphits große Schwierigkeiten (z.B. Verschmutzung der Verarbeitungsmaschinen) bereitet.

Überraschenderweise wurde nun gefunden, daß man auf einfache und wirtschaftliche Weise organische Kunststoffe mit erhöter, zeitlich unveränderter, durch Einwirkung von Luft, Wärme und Scherkräften unbeeinträchtigter elektrischer Leitfähigkeit erhält, wenn man in die organischen Kunststoffe als leitfähigkeitserhöhenden Stoff ausschließlich pulverisierten Koks einarbeitet.

Im Gegensatz zu der Einarbeitung von Aktivkohle, Ruß, Graphit oder Graphit/Koks-Gemischen in Kunststoffe läßt sich Kokspulver für sich allein ohne Schwierigkeiten in Kunststoffe einarbeiten. Die Kunststoffe erlangen durch der Gehalt an Kokspulver eine wesentliche Verbesserung ihrer elektrischen Eigenschaften, ohne daß ihre mechanischen und verarbeitungstechnischen Eigenschaften eine Beeinträchtigung erfahren.

Die Erfindung betrifft daher die Verwendung von Kokspulver zur Erhöhung der elektrischen Leitfähigkeit von organischen Kunststoffen und organische Kunststoffe mit einer durch die Einarbeitung von feinteiligem Kohlenstoff bewirkten erhöhten elektrischen Leitfähigkeit, die dadurch gekennzeichnet sind, daß sie als feinteiligen Kohlenstoff ausschließlich Kokspulver enthalten.

Die erfindungsgemäß zu verwendenden Kokspulver werden durch Mahlen von handelsüblichem, aus Steinkohle gewonnenem Koks und anschließendes Sieben erhalten. Die Korngröße der einzelnen Kokspartikelchen in den erfindungsgemäß zu verwendenden Kokspulvern ist vorzugsweise nach <100 μm, und liegt besonders bevorzugt im Bereich von 10 bis 60 μm.

Die erfindungsgemäß zu verwendenden Kokspulver werden vorzugsweise in Mengen von 10 bis 70 Gew.-%, besonders bevorzugt in Mengen von 20 bis 60 Gew.-%, bezogen auf das Gesamtgewicht des elektrisch leitfähigen Kunststoffs, angewendet.

Ein wesentlicher Vorteil der erfindungsgemäß zu verwendenden Kokspulver gegenüber in Aktivkohle, Ruß und Graphit liegt in der Möglichkeit, sie auch in Mengen über 30 Gew.-% problemlos in Kunststoffe einarbeiten zu können. Selbst die Einarbeitung von 50 Gew.-% Kokspulver in thermoplastische Kunststoffe bereitet keinerlei Schwierigkeiten. Die erfindungsgemäß zu verwendenden Kokspulver weisen vielmehr die überraschende Eigenschaft auf, daß sie nicht nur die Leitfähigkeit, sondern - im Gegensatz z.B. zu Ruß - sogar auch die mechanischen Eigenschaften der organischen Polymere, z.B. von Polyamiden, verbessern. Während der Zusatz größerer Ruß- und Graphit-Mengen zu einer Verschlechterung der mechanischen Eigenschaften der organischen Kunststoffe, z.B. von Polyamiden, führt, wird bei Zusatz größerer Mengen der erfindungsgemäß zu verwendenden Kokspulver eine Verbesserung der mechanischen Eigenschaften der organischen Kunststoffe erhalten. Diese Verbesserung der mechanischen Eigenschaften tritt besonders bei der Einarbeitung der erfindungsgemäß zu verwendenden Kokspulver in Polyamide auf.

Die erfindungsgemäß zu verwendenden Kokspulver können nach für die Einarbeitung von Füllstoffen in organische Polymere üblichen Methoden in die organischen Kunststoffe eingearbeitet werden. Die Einarbeitung in Thermoplasten kann z.B. durch trockenes Vermischen und nachfolgendes Extrudieren in einer handelsüblichen Schnecke oder unmittelbar in einer Schnecke durch gemeinsames Zudosieren von Kunststoff und Kokspulver erfolgen. Vorzugsweise werden in einer ersten Stufe Pellets aus dem Thermoplast/Kokspulver-Gemisch hergestellt, die dann in einer zweiten Stufe zu den gewünschten Formkörpern ver arbeitet werden.

Organische Kunststoffe, deren Leitfähigkeut durch den erfindungsgemäßen Kokspulverzusatz erhöht werden kann, sind vorzugsweise Thermoplaste. Vorzugsweise kommen als Thermoplaste in Betracht: Polymerisate und Copolymerisate aus monoolefinisch ungesättigten Monomeren, z.B. Hochdruck- oder Niederdruck-Polyethylen, Polypropylen, Polymethylmethacrylat, Polyvinylpyrrolidon, Polystyrol; Copolymerisate wie ABS; Polykondensate wie Polycarbonate, Polyester (z.B. Polyethylenterephthalat und Polybutylenterephthalat), Polyphenylensulfid und vor allem Polyamide wie Polyamide-6, Polyamid-66 und Polyamid-6,10.

Die organischen Kunststoffe können außer dem erfindungsgemäß zu verwendenden Kokspulver übliche Zusatzstoffe, wie Füllstoffe, Pigmente, Antioxidantien, UV-Stabilisatoren, Hydrolyse-Stabilisatoren und/oder Weichmacher enthalten.

Die erfindungsgemäß erhältlichen kokspulverhaltigen organischen Kunststoffe (Polymercompounds) zeigen spezifische Leitfähigkeiten zwischen $10^{-12}$ und 10 S/cm. Sie können zur Herstellung antistatischer, halbleitender oder leitender Kunststoffteile dienen. Diese Kunststoffteile finden Anwendung als Elektroden, z.B. in Elektrolysezellen oder in Batterien, als Heizleiter, als nicht aufladbare Gehäuse sowie zur Abschirmung elektromagnetischer Wellen.

### Beispiel 1

In 50 Gew.-Teile Polyamide-6 mit einer relativen Lösungsviskosität von 2,9 (gemessen an einer Lösung von 1 g Polyamide in 100 ml m-Kresol bei 25°C) werden 50 Gew.-Teile Kokspulver (Korngröße: 10-63 μm) auf einem Doppelwellenextruder (ZSK 53 der Fa. Werner & Pfleiderer) bei einer Massetemperatur von 250°C und einem Durchsatz von 24 kg/h eingearbeitet. Der abgezogene Strang wird gekühlt, granuliert und getrocknet. Anschließend wird das Granulat auf einer Spritzgießmaschine (A 270 der Fa. Arburg) zu Norm-Kleinstäben verarbeitet.

In der nachstehenden Tabelle sind die Eigenschaften dieser Norm-Kleinstäbe sowie die Eigenschaften der aus reinem Polyamid-6, und aus handelsüblichen, antistatisch ausgerüsteten Polyamiden hergestellten Norm-Kleinstäbe zusammengestellt.

EP 0 335 184 A1

Tabelle 1

|  | PA-6/Koks | Ultramid 85® * | Luvocom® ** | Polyamid-6 |
|---|---|---|---|---|
| Biegefestigkeit [N/mm$^2$] | 148 | 85 | 85 | 85 |
| Biege-E-Modul [GPa] | 5,7 | 5 | - | 2,6 |
| Schlagzähigkeit [kJ/m$^2$] | 28 | 30 | 12 | ungebrochen |
| Oberflächenwiderstand $R_{OB}$ ($\Omega$) | 10$^3$ | 10$^8$-10$^{10}$ | 10$^4$ | 10$^{14}$ |

\* Im Handel befindliches antistatisch ausgerüstetes Polyamid
\*\* Im Handel befindliches mit Ruß antistatisch ausgerüstetes Polyamid

Auf der Oberflächen der mit Kokspulver ausgerüsteten Prüfkörper war weder während oder nach dem Spritzvorgang, noch nach 7-tägiger Lagerung bei 70° im Trockenschrank irgendeine Abscheidung von Kokspulver-Teilchen feststellbar; der Oberflächenglanz der erfindungsgemäß ausgerüsteten Prüfkörper war unverändert erhalten.

Beispiel 2

Es wurde wie in Beispiel 1 beschrieben verfahren und in die 50 Gew.-Teile Polyamid 6 in Versuch a) 50 Gew.-Teile Kokspulver (Korngröße: 10-63 μm) und in Versuch b) 50 Gew.-Teile eines Gemisches aus 45 Gew.-Teilen Kokspulver (Korngröße: 10-63 μm) und 5 Gew.-Teilen Graphit eingearbeitet.

Die Norm-Kleinstäbe, die aus den in den Versuchen (a) und (b) erhaltenen Compound-Granulaten hergestellt wurden, wiesen die in der nachfolgenden Tabelle 2 angegebenen Eigenschaften auf.

Tabelle 2

|  | Compound (a) | Compound (b) |
|---|---|---|
| Biegefestigkeit [N/mm$^2$] | 136 | 112 |
| Biege-E-Modul [MPa] | 6280 | 6080 |
| Zugfestigkeit | 75,3 | 60,5 |
| Oberflächenwiderstand $R_{OB}$ [$\Omega$] | 10$^2$ | 10$^2$ |

Beispiel 3

50 Gew.-Teile Polybutylenterephthalat und 50 Gew.-Teile Kokspulver (Korngröße: 10-63 μm) werden intensiv miteinander vermengt; die Mischung wird bei 300° C geschmolzen. Nach dem Abkühlen wird die erstarrte Masse granuliert. Dieses Granulat wird in einem Preßwerkzeug innerhalb von 10 Minuten bei einer Temperatur von 300° C und einem Druck von 1100 Kp/m$^2$ zu einer Platte verpreßt.

Es wird eine stabile Kunststoff-Platte erhalten; sie weist eine spezifische Leitfähigkeit von 3,5 • 10$^{-2}$ S/cm auf.

**Ansprüche**

1. Verwendung von Kokspulver zur Erhöhung der elektrischen Leitfähigkeit von organischen Kunststoffen.

2. Verwendung gemäß Anspruch 1, dadurch gekennzeichnet, daß die Korngröße des Kokspulvers <100 μm ist.

3. Verwendung gemäß Anspruch 1, dadurch gekennzeichnet, daß das Kokspulver in einer Menge von 10 bis 70 Gew.-%, bezogen auf das Gewicht des elektrisch leitfähigen Kunstoffs, eingesetzt wird.

4

4. Verwendung gemäß Anspruch 1, 2 oder 3, dadurch gekennzeichnet, daß der organische Kunststoff ein Thermoplast ist.

5. Organische Kunststoffe mit einer durch die Einarbeitung von feinteiligem Kohlenstoff bewirkten erhöhten elektrischen Leitfähigkeit, dadurch gekennzeichnet, daß sie als feinteiligen Kohlenstoff ausschließlich Kokspulver enthalten.

6. Organische Kunststoffe gemäß Anspruch 5, dadurch gekennnzeichnet, daß ihr Gehalt an Kokspulver 10 bis 70 Gew.-%, bezogen auf das Gewicht des elektrisch leitfähigen Kunststoffs beträgt.

7. Verfahren zur Herstellung von organischen Kunststoffen mit verbesserter elektrischer Leitfähig keit durch Einarbeiten von feinteiligem Kohlenstoff in die organischen Kunststoffe nach für die Einarbeitung von Füllstoffen in organische Kunststoffe üblichen Methoden, dadurch gekennzeichnet, daß man als feinteiligen Kohlenstoff ausschließlich Kokspulver verwendet.

Europäisches
Patentamt

**EUROPÄISCHER RECHERCHENBERICHT**

Nummer der Anmeldung

EP 89 10 4665

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 419 502 (COAL INDUSTRY) <br> * Ansprüche * <br> --- | 1-7 | C 08 K 3/04 <br> H 01 B 1/24 |
| X | GB-A-1 144 325 (DOW CHEMICAL CO.) <br> * Ansprüche * <br> --- | 1-7 | |
| X | PATENT ABSTRACTS OF JAPAN, Band 5, Nr. 102 (C-61)[774], 2. Juli 1981; & JP-A-56 43 376 (SANKOUSHIYA K.K.) 22-04-1981 <br> * Zusammenfassung * <br> --- | 1-7 | |
| X | PATENT ABSTRACTS OF JAPAN, Band 9, Nr. 88 (C-276)[1811], 17. April 1985; & JP-A-59 221 342 (NIPPON YUSHI K.K.) 12-12-1985 <br> * Zusammenfassung * <br> ----- | 1-7 | |
| | | | **RECHERCHIERTE SACHGEBIETE (Int. Cl.4)** <br><br> C 08 K <br> H 01 B |

Der vorliegende Recherchenbericht wurde für alle Patentansprüche erstellt

| Recherchenort | Abschlußdatum der Recherche | Prüfer |
|---|---|---|
| DEN HAAG | 07-07-1989 | HOFFMANN K.W. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument